**Europäisches Patentamt**

**European Patent Office**

**Office européen des brevets**

(19)

(11) Veröffentlichungsnummer: **0 058 955**
**A1**

(12) # EUROPÄISCHE PATENTANMELDUNG

(21) Anmeldenummer: **82101262.2**

(22) Anmeldetag: **19.02.82**

(51) Int. Cl.³: **B 25 J 11/00**

(30) Priorität: **25.02.81 DE 3107013**

(43) Veröffentlichungstag der Anmeldung: **01.09.82**
**Patentblatt 82/35**

(84) Benannte Vertragsstaaten: **AT BE CH FR GB IT LI NL SE**

(71) Anmelder: **Richter, Hans, Ortlerstrasse 77,**
**D-8900 Augsburg (DE)**

(72) Erfinder: **Richter, Hans, Ortlerstrasse 77,**
**D-8900 Augsburg (DE)**

(74) Vertreter: **Charrier, Rolf, Dipl.-Ing.,**
**Postfach 260 Rehlingenstrasse 8,**
**D-8900 Augsburg 31 (DE)**

(54) **Vorrichtung zum Gewichtsausgleich bei einem Industrieroboter.**

(57) Wird ein Industrieroboter mit seinem Gestell 2 um eine horizontale Achse 3 drehend betrieben, übt je nach Stellung des Gestells 2 das Gewicht des Baumes 7 ein erstes Drehmoment um die Schwenkachse 4 seines einen Schwenkarmes 5 und ein zweites Drehmoment um die Drehachse 3 des Gestells 2 aus, die es auszugleichen gilt. Zu diesem Drehmomentenausgleich ist ein Druckzylinder 17 vorgesehen, dessen Kolbenstange 16 gelenkig mit einem Arm 15 eines Winkelhebels 13 verbunden ist. Dieser Winkelhebel 13 ist um eine ortsfeste horizontale Achse 14 schwenkbar, welche rechtwinklig zur Drehachse 3 verläuft. Mit dem anderen Arm 18 des Winkelhebels 15 ist gelenkig ein Schwenkhebel 19, 20 verbunden, der schwenkbar am Schwenkarm 5 im Abstand zu dessen Schwenkachse 4 angreift.

Dipl.-Ing.
*Rolf Charrier*
Patentanwalt

Rehlingenstraße 8 · Postfach 260
D-8900 Augsburg 31
Telefon 08 21/3 60 15 – 3 60 16
Telex 53 3 275
Postscheckkonto. München Nr. 1547 89-801

8379/29
ch-ha

Augsburg, den 18. Februar 1982


Hans Richter

Ortlerstr. 77

8900 Augsburg


<u>Vorrichtung zum Gewichtsausgleich bei</u>
<u>einem Industrieroboter</u>


Die Erfindung betrifft eine Vorrichtung zum Gewichtsausgleich bei einem Industrieroboter mit mindestens
einem Schwenkarm, der an einem Gestell über eine
Schwenkachse schwenkbar gelagert ist und der schwenkbar einen Baum trägt, wobei das um eine im wesentlichen
horizontale Drehachse drehbar ist.

Zum Gewichtsausgleich bei Industrierobotern, deren
Gestell um eine vertikale Drehachse drehbar ist, ist es
bekannt, einen Schwenkarm über seine Schwenkachse hinaus
zu verlängern. An dieser Verlängerung greift ein Ausgleichsgewicht oder das Betätigungsglied einer eine
Ausgleichskraft erzeugenden Vorrichtung an, welche am
Gestell gelagert ist. Auf diese Weise ist es möglich, das
Gewicht des Baumes und ggfs. das vom Baum getragene
Gewicht auszugleichen.

0058955

Wird jedoch ein Industrieroboter in einer dazu 90$^o$ gedrehten Lage betrieben, dann ist ein solcher Gewichtsausgleich nicht mehr wirksam. Bei einer um 90$^o$ gedrehten
Lage des Roboters verläuft nämlich die Drehachse des
Gestells horizontal. Hierbei sind dann im wesentlichen
zwei Extremfälle vorhanden. Im einen Fall weist der
Baum etwa senkrecht nach unten und die beiden Schwenkarme verlaufen im wesentlichen horizontal. In einem
solchen Fall ist das senkrecht nach unten weisende
Gewicht des Baums und der beiden Schwenkarme auszugleichen. Dieses Gewicht erzeugt ein erstes Drehmoment um die Schwenkachse des einen Schwenkarms.
Der zweite auftretende Extremfall besteht darin, daß von
der vorgenannten Stellung aus gesehen das Gestell um die
horizontale Drehachse herum um 90$^o$ gedreht wird, so daß
nunmehr der Baum etwa horizontal verläuft, ebenso wie
die beiden Schwenkarme. Das Gewicht des Baumes und der
Schwenkarme bewirken ein zweites Drehmoment um die Drehachse des Gestells, d.h. ohne Gewichtsausgleich würde
der Roboter versuchen, um die Drehachse des Gestells
drehend die zuvor beschriebene Position wieder einzunehmen, bei welcher der Baum etwa vertikal nach unten
zeigt. Diese Drehmomente verändern sich zudem, je
nach dem der Baum aus- oder eingefahren ist und sie sind
außerdem abhängig von jeder Zwischenstellung des Baumes
um die horizontale Drehachse.

Es besteht die Aufgabe, das Gewicht des Baumes und der
beiden Schwenkarme und ggfs. das vom Baum getragene Gewicht bei einem Industrieroboter auszugleichen, bei welchem
die Drehachse des Gestells im wesentlichen horizontal
verläuft.

Gelöst wird diese Aufgabe mit den Merkmalen des Anspruches 1 oder 2. Vorteilhafte Ausgestaltungen sind den
Unteransprüchen  entnehmbar.

Ausführungsbeispiele werden nachfolgend anhand der
Zeichnungen näher erläutert. Es zeigen:

Fig. 1 eine erste Ausführungsform in der Seitenansicht;

Fig. 2 eine zweite Ausführungsform ebenfalls in der
       Seitenansicht;

Fig. 3 einen Schnitt längs der Linie A-A in Fig. 1 in
       einer Stellung, bei welchem der Baum senkrecht
       nach unten zeigt;

Fig. 4 einen Schnitt entsprechend Fig. 3, bei welcher
       das Gestell um etwa 45$^{o}$ um seine Drehachse
       nach rechts gedreht ist und

Fig. 5 eine Ausführungsvariante zur Ausführungsform
       nach Fig. 1.

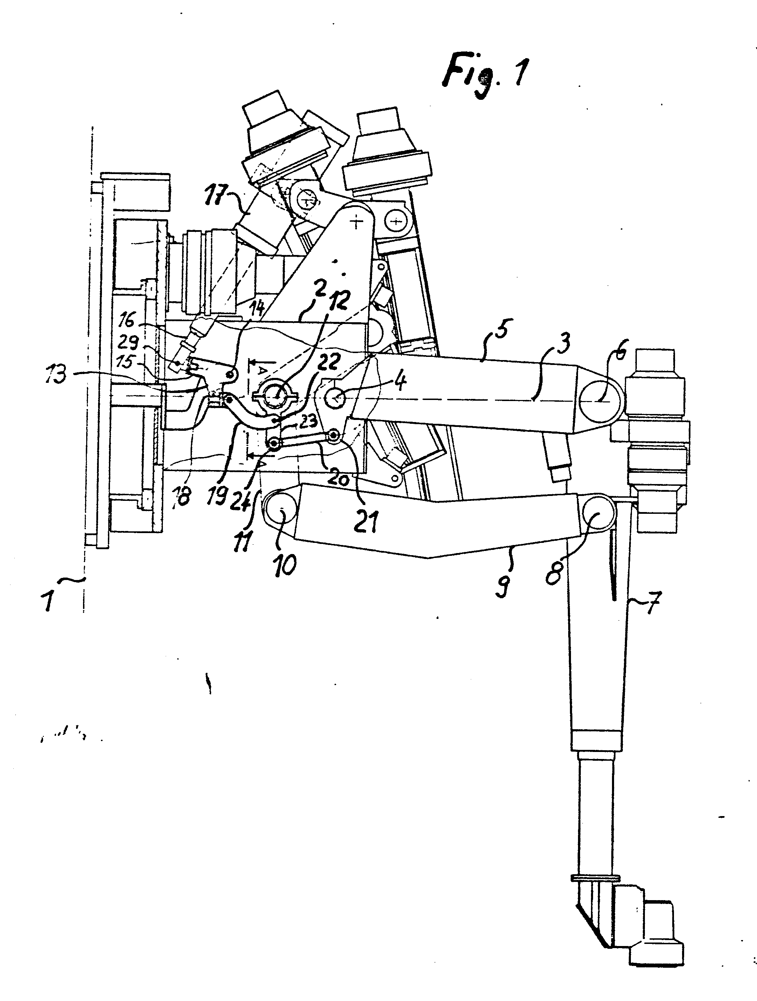

Der in Fig. 1 gezeigte Roboter ist an einer vertikal
verlaufenden Wand 1 befestigt. Sein Gestell 2 ist um eine
horizontal verlaufende Achse 3 drehbar. Über eine Schwenkachse 4 ist ein erster Schwenkarm 5 schwenkbar am Gestell 2 befestigt. Dieser Schwenkarm 5 trägt über die
Achse 6 den Baum 7. Über eine Achse 8 ist mit dem Baum
7 ein anderer Schwenkarm 9 verbunden, welcher über die
Achse 10 mit einem weiteren Schwenkarm 11 verbunden ist,
welcher am Gestell 2 über die Achse 12 schwenkbar angelenkt ist. Die Achsen 4,6,8,10,12 verlaufen zueinander parallel.

Dieser Aufbau ist im wesentlichen bekannt.

In der in Fig. 1 gezeigten Stellung bewirken die
Gewichte von Baum 7 und Schwenkarmen 5,9 ein erstes
Drehmoment im Uhrzeigersinn um die Achse 4. Es gilt,
dieses erste Drehmoment auszugleichen.

Um dies zu erreichen, ist ein Winkelhebel 13 vorgesehen, welcher um eine ortsfeste horizontale Achse 14
schwenkbar ist. Am einen Hebelarm 15 dieses Winkelhebels 13 ist die  Kolbenstange 16 eines Zylinders 17
angelenkt, der mit dem Gestell 2 verbunden ist. Am
anderen Arm 18 ist ein  Schwenkhebel 19,20 angelenkt,
der um eine Achse 21 am Schwenkarm 5 schwenkbar ist,
welche parallel und im Abstand zur Achse 4 des einen
Schwenkarms 5 verläuft. Der Schwenkhebelteil 19 ist um
eine Achse 22 eines Zwischenhebels  23 schwenkbar. Dieser
Zwischenhebel 23 ist seinerseits schwenkbar um die Achse
12 des weiteren Schwenkarmes 11. Der weitere Schwenkhebelteil 20 ist um eine Achse 24 am Zwischenhebel 23
schwenkbar.

Wird vom Zylinder 17 ein Druck ausgeübt, dann wirkt dieser
Druck über den Winkelhebel 13, den Schwenkhebelteilen 19,
20 und den Zwischenhebel 23 dem Drehmoment entgegen,
welches vom Gewicht des Baums 7 und der Schwenkarme
5,9 ausgeübt wird, in dem der Schwenkhebelteil 20
ein Gegendrehmoment um die Achse 4 auf dem Schwenkarm 5 ausübt.

Der Zwischenhebel 23 ist vorgesehen, um den Schwenkbereich des Arms 18 des Winkelhebels 14 in der Wirkung
auf den Schwenkbereich des Schwenkarmes 5 zu vergrößern.

Die jeweiligen Schwenkbereiche sind gestrichelt dargestellt. Für jede winkelmäßige Stellung der Schwenkarme 5,9 kann somit das von den Gewichten der Schwenkarme 5,9 und des Baums 7 ausgeübte Drehmoment um
die Achse 4 durch ein entgegengesetzt großes Drehmoment,
ebenfalls um die Achse 4, ausgeglichen werden.

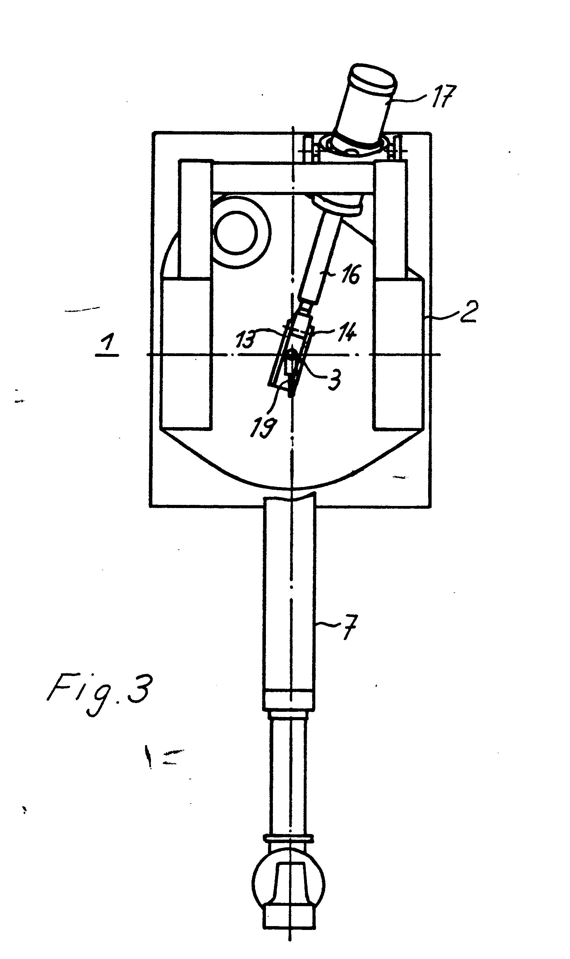

In der in den Fig.1 und 3 gezeigten Stellung üben weder
der Zylinder 17 nocht die Gewichte von Baum 7 und
Schwenkarmen 5,9 ein Drehmoment um die Drehachse 3 aus.

Wird das Gestell 2 nunmehr um 90° um die Drehachse 3 gedreht, dann wirken die Gewichte von Baum 7 und von
Schwenkarm 5 und 9 sich in einem Drehmoment um die
Achse 3 aus.

Bei der vorgenannten Drehung um 90° um die Drehachse
3 drehen sich die Teile 16,17,19,20,23 mit und nehmen
eine Stellung ein, welche um 90° gedreht ist zu der
in Fig. 1 und 3 gezeigten Stellung. Der Winkelhebel
13 verbleibt jedoch in der in Fig. 1 und 3 gezeigten Stellung.

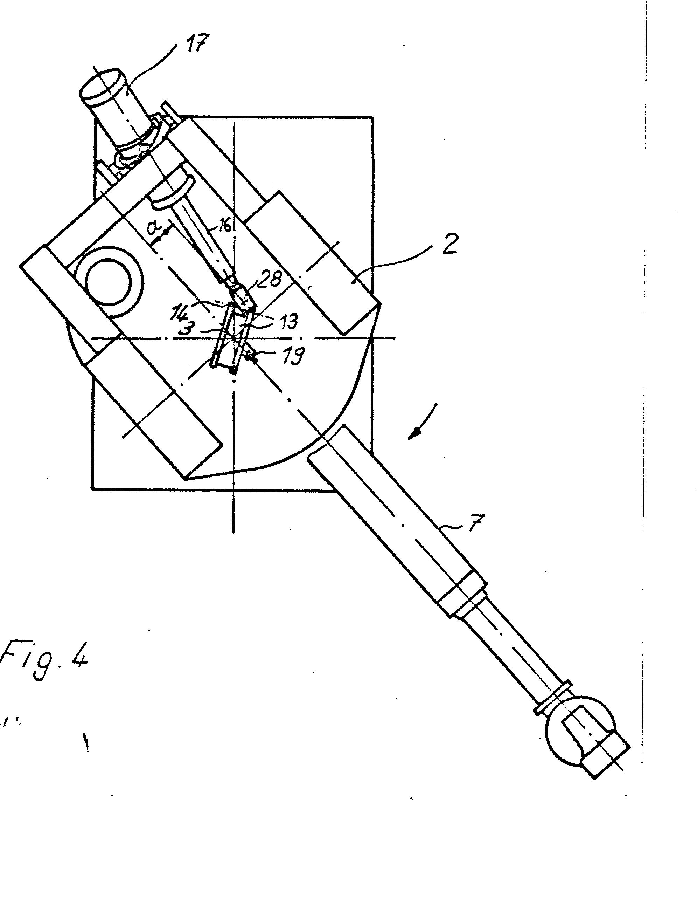

Die Fig. 4 zeigt eine Zwischenstellung, bei welcher
das Gestell 2 um etwa 45° um die Achse 3 von der in Fig.
3 gezeigten Stellung gedreht ist. Das Gewicht des Baumes
7 erzeugt hierbei ein Drehmoment im Uhrzeigersinn um
die Achse 3. Dies ist durch einen Pfeil angedeutet. Die
Kolbenstange 16, welche bei den Stellungen nach den
Fig. 1 und 3 noch in Richtung auf die Drehachse 3 gerichtet war, ist infolge der vorgenannten Drehung des
Gestells 2 nunmehr am Winkelhebel 13 im Abstand a angelenkt. Infolge der nunmehr exzentrischen Anlenkung der

0058955

Kolbenstange 16 übt der Zylinder 17 auf das Gestell
2 nunmehr ein Drehmoment um die Achse 3 aus, welches
im Gegenuhrzeigersinn den von dem Gewicht des Armes 7
ausgeübten Drehmoment entgegenwirkt.

Ist der Baum 7 um 90° geschwenkt,dann üben die vorgenannten Gewichte von Baum 7 und Schwenkarmen 5,9
kein Drehmoment mehr um die Achse 4 aus. In gleicher
Weise übt dann auch der Zylinder 17 kein Drehmoment
um die Achse 4 aus. Das in dieser Stellung vom
Zylinder 17 erzeugte Drehmoment wirkt allein im
Gegenuhrzeigersinn um die Achse 3.

Bei der in Fig. 4 gezeigten Zwischenstellung dagegen
übt der Zylinder 17 sowohl ein Drehmoment um die
Achse 4 als auch ein Drehmoment um die Achse 3 aus.

Der Gewichtsausgleich ist auch abhängig vom Abstand
des Baumes 7 zur Achse 3. Die vorbeschriebene Gewichtsausgleichsvorrichtung ist zudem in jeder Stellung des Baumes 7 relativ zur Achse 3 wirksam.

Damit sich der Schwenkhebel 19,20 relativ zum Winkelhebel 13 zu verdrehen vermag, ist er um eine Achse
26 drehbar, welche rechtwinklig zur Achse 14 und im
wesentlichen koaxial zur Drehachse 3 verläuft. Dieser
Schwenkhebel 19,20 ist zudem um eine Achse 27 schwenkbar. Diese Achse 27 verläuft parallel zu den Achsen 22,
24,21.

In entsprechender Weise muß auch die Kolbenstange 16
relativ zum Winkelhebel 13 verdrehbar sein. Die
Kolbenstange 16 ist zum Winkelhebel 13 um die Achse
28 drehbar, welche rechtwinklig zur Achse 14 verläuft und um eine Achse 29 schwenkbar, welche rechtwinklig
zur Drehachse 28 verläuft. Anstelle über Achsen 26,
27 bzw. 28, 29 können der Schwenkhebel 19, 20 bzw.
die Kolbenstange 16 auch über Kugelgelenke am Winkelhebel 13 angelenkt sein.

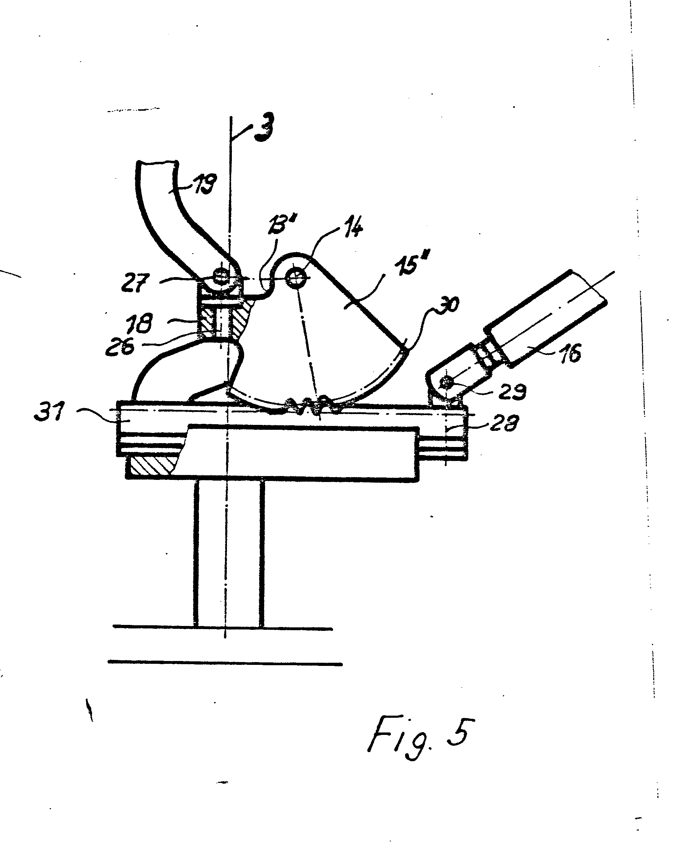

Eine weitere Möglichkeit der Kraftübertragung von
der Kolbenstange 16 auf den Winkelhebel und damit
auf den Schwenkhebelteil 19 zeigt die Fig. 5. Der
Winkelhebel 13'' weist wiederum eine ortsfeste
Achse 14 auf, welche relativ zum Gestell 2 orstfest
ist. Der Arm 15'' des Winkelhebels 13'' ist mit
einem Zahnsegment 30 versehen, welche mit einer
Zahnstange 31 kämmt, welche rechtwinklig zur Drehachse 3 verschiebbar ist. An der Zahnstange 31 angelenkt
ist die Kolbenstange 16, welche einerseits um die
Achse 28 drehbar und  um die Achse 29 schwenkbar zur
Zahnstange 31 ist.

Die Wirkungsweise der Anordnung nach Fig. 5 ist die
gleiche , wie im Zusammenhang mit den Fig. 1,3 und 4
beschrieben.

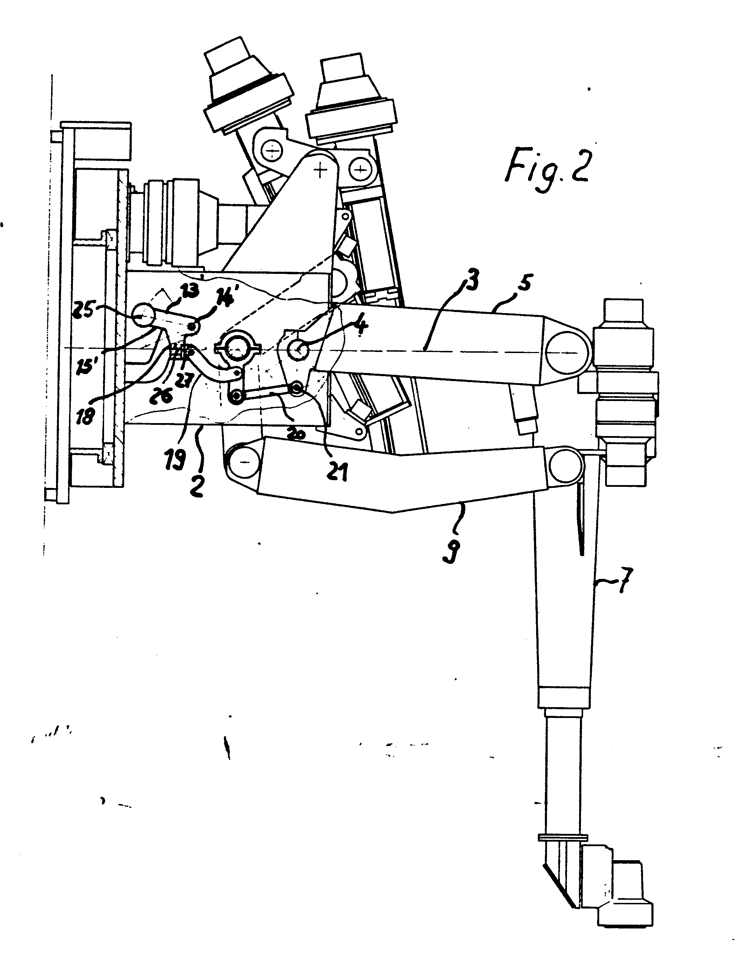

Bei der Ausführungsform nach Fig. 2 wird der Winkelhebel 13' vom Gestell 2 getragen, so daß er mit seiner
Achse 14' um die Drehachse 3 drehbar ist. Der Arm 15'
trägt ein Gegengewicht 25. Im übrigen ist die Ausbildung gleich wie im Zusammenhang mit den anderen
Figuren beschreiben. In der in Fig. 2 gezeigten Stellung übt das Gegengewicht 25 ein Drehmoment um die
Achse 4 aus, welches dem Drehmoment entgegengesetzt ist, welches von den Gewichten des Baumes 7 und
der Schwenkarme 5,9 ausgeübt wird. Wird das Gestell 2 um die Achse 3 gedreht, dann dreht sich der Winkelhebel 15' mit und mit wachsender Drehung erzeugt das im
Abstand zur Achse 3 angeordnete Gewicht 25 ein Gegendrehmoment um die Achse 3 zu dem Drehmoment, welches
vom Baum 7 und den Schwenkarmen 5,9 um die Achse
3 ausgeübt wird.

Dipl.-Ing.
*Rolf Charrier*
Patentanwalt

Rehlingenstraße 8 · Postfach 260
D-8900 Augsburg 31
Telefon 08 21/3 60 15 + 3 60 16
Telex 53 3 275
Postscheckkonto München Nr. 547 89-801

8379/29          -9-
ch-ha

Anm.: Hans Richter
Augsburg, den   18. Februar 1982

## Ansprüche

1. Vorrichtung zum Gewichtsausgleich bei einem Industrieroboter mit mindestens einem Schwenkarm, der an einem
Gestell um eine Schwenkachse schwenkbar gelagert ist
und der schwenkbar einen Baum trägt, wobei das Gestell
um eine im wesentlichen horizontale Drehachse drehbar ist,
dadurch  g e k e n n z e i c h n e t , daß am Gestell (2)
eine Ausgleichskraft erzeugende Vorrichtung gelagert ist,
deren Betätigungsglied (16) gelenkig im Abstand zur
Drehachse (3) an einem Arm (15) eines Winkelhebels (13)
angreift, der um eine ortsfeste horizontale Achse
(14) schwenkbar ist, die rechtwinklig zur Drehachse
(3) verläuft und  am anderen Arm (18) des Winkelhebels
(13) ein Schwenkhebel (19,20) gelenkig angreift, der am
Schwenkarm (5) um eine  Achse (21) schwenkbar ist,
die im Abstand parallel zur Schwenkachse (4) dieses
Schwenkarms (5) verläuft.

2. Vorrichtung nach dem Oberbegriff des Anspruches 1, dadurch  g e k e n n z e i c h n e t , daß am Gestell
(2) ein Winkelhebel (13') um eine Achse (14') schwenkbar gelagert ist, die rechtwinklig zur Drehachse (3)
verläuft, ein Arm (15') des Winkelhebels (13') ein
Ausgleichsgewicht (25) trägt und am anderen Arm (18)
des Winkelhebels (13 ) ein Schwenkhebel (19,20) ge-

-10-

lenkig angreift, der am Schwenkarm (5) um eine Achse (21) schwenkbar ist, die im Abstand parallel zur Schwenkachse (4) dieses Schwenkarmes (5) verläuft.

3. Vorrichtung nach Anspruch 1 oder 2, dadurch g e - k e n n z e i c h n e t , daß der Schwenkhebel (19, 20) am Winkelhebel (13,13') um eine erste Achse (26) drehbar ist, die senkrecht zur Achse (14,14') verläuft, um die der Winkelhebel (13,13') schwenkbar ist und um eine zweite Achse (27) schwenkbar ist, die parallel zur Schwenkachse (4) des einen Schwenkarms (5) verläuft.

4. Vorrichtung nach Anspruch 3, dadurch g e k e n n - z e i c h n e t , daß die erste Achse (26) im wesentlichen mit der Drehachse (3) zusammenfällt.

5. Vorrichtung nach Anspruch 1, dadurch g e k e n n - z e i c h n e t , daß das Betätigungsglied (16) am Winkelhebel (13) um eine erste Achse (28) drehbar ist, die senkrecht zur ortsfesten horizontalen Achse (14) verläuft und um eine zweite Achse (29) schwenkbar ist, die senkrecht zu dieser ersten Achse (28) verläuft.

6. Vorrichtung nach Anspruch 1 oder 2, dadurch g e - k e n n z e i c h n e t , daß der Schwenkhebel (19,20) über ein Kugelgelenk am Winkelhebel (13,13') angelenkt ist.

7. Vorrichtung nach Anspruch 1, dadurch g e k e n n - z e i c h n e t, daß das Betätigungsglied (16) über ein Kugelgelenk am Winkelhebel (13) angelenkt ist.

8. Vorrichtung nach einem der Ansprüche 1 bis 7, dadurch
   g e k e n n z e i c h n e t , daß der Schwenkhebel
   (19,20) zweigeteilt ausgebildet ist, wobei der eine
   Schwenkhebelteil (19) am Winkelhebel (13,13') angelenkt
   und um eine Achse (22) an einem Zwischenhebel (23)
   schwenkbar ist, der seinerseits um eine dazu parallele
   Achse (12) schwenkbar ist und wobei der andere Schwenkhebelteil (20) um eine weitere dazu parallele Achse
   (24) am Zwischenhebel (23) schwenkbar und am einen
   Schwenkarm (5) um die zu seiner Schwenkachse (4)
   parallele Achse (21) schwenkbar ist.

9. Vorrichtung nach einem der Ansprüche 1 bis 8, dadurch
   g e k e n n z e i c h n e t , daß das Betätigungsglied
   (16) an einer zur Drehachse (3) rechtwinklig verschiebbaren Zahnstange angreift, die in Eingriff steht mit
   einem Zahnsegment am einen Arm (15) des Winkelhebels (13).

10. Vorrichtung nach einem der Ansprüche 1 bis 9, dadurch
    g e k e n n z e i c h n e t , daß die die Ausgleichs-
    kraft erzeugende Vorrichtung ein Druckzylinder ist.

11. Vorrichtung nach Anspruch 8, dadurch g e k e n n -
    z e i c h n e t , daß die eine Achse (22) am Zwischenhebel (23) näher an dessen Achse (12) angeordnet ist
    als die weitere dazu parallele Achse (24).

12. Vorrichtung nach Anspruch 8 oder 11, dadurch g e -
    k e n n z e i c h n e t , daß die Achse (12) des
    Zwischenhebels (23) die Achse eines Schwenkarmes
    (11) ist, der schwenkbar mit einem weiteren Schwenkarm (9) verbunden ist, an dem der Baum (7) schwenk-
    bar angelenkt ist.

0058955

Fig. 1

Fig.2

Fig.3

*Fig. 4*

0058955

Fig. 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X,P | EP-A-0 034 959 (RENAULT) <br> * Insgesamt * <br><br> --- | 1-3,6 | B 25 J 11/00 |
| X | EP-A-0 019 596 (BASFER) <br> * Seite 9, Zeile 6 - Seite 11, Zeile 4 * <br><br> --- | 1,10 | |
| X | DE-A-2 841 183 (INDUSTRIE-WERKE KARLSRUHE AUGSBURG) <br> * Insgesamt * <br><br> --- | 1,8 | |
| A,P | DE-A-3 038 419 (HITACHI) <br> * Abbildung 9A * <br><br> ----- | 8,11 | |

RECHERCHIERTE SACHGEBIETE (Int. Cl. ³)

B 25 J

Der vorliegende Recherchenbericht wurde für alle Patentansprüche erstellt.

| Recherchenort | Abschlußdatum der Recherche | Prüfer |
|---|---|---|
| DEN HAAG | 02-06-1982 | LAMMINEUR P.C.G. |